**Europäisches Patentamt**

(19) **European Patent Office**

**Office européen des brevets**

(11) Numéro de publication: **0 069 640**
**B1**

(12) # FASCICULE DE BREVET EUROPEEN

(45) Date de publication du fascicule du brevet:
17.04.85

(51) Int. Cl.⁴: **H 02 J 7/02,** H 02 J 7/10,
G 01 T 1/175

(21) Numéro de dépôt: **82401180.3**

(22) Date de dépôt: **25.06.82**

(54) Dispositif d'alimentation électrique pour appareils mobiles, tels que des dosimètres portatifs.

(30) Priorité: 03.07.81 FR 8113153

(43) Date de publication de la demande:
12.01.83 Bulletin 83/2

(45) Mention de la délivrance du brevet:
17.04.85 Bulletin 85/16

(84) Etats contractants désignés:
DE GB IT NL

(56) Documents cités:
EP - A - 0 019 222
FR - A - 2 425 160
US - A - 3 938 018
US - A - 4 198 593

ELECTRONICS INTERNATIONAL, vol. 50, no. 2, 20
janvier 1977, page 8E et 10E, New York (USA);
"Inductive coil used to charge batteries and read out
data from -170 dosimeter"

(73) Titulaire: **SOCIETE D'APPLICATIONS DE LA PHYSIQUE
MODERNE ET DE L'ELECTRONIQUE SAPHYMO-STEL,
29, avenue Carnot, F-91301 Massy (FR)**

(72) Inventeur: **Gilles, Jacques, THOMSON-CSF
SCPI 173, bld Haussmann, F-75379 Paris Cedex 08 (FR)**
Inventeur: **Brisebourg, Didier, THOMSON-CSF
SCPI 173, bld Haussmann, F-75379 Paris Cedex 08 (FR)**

(74) Mandataire: **Schmolka, Robert et al, THOMSON-CSF
SCPI 173, Bld Haussmann, F-75379 Paris Cedex 08 (FR)**

## Description

La présente invention concerne un dispositif destiné à l'alimentation en énergie électrique d'un appareil mobile portatif à l'aide d'une batterie d'accumulateurs rechargeables, comprenant un dispositif de recharge dont une première partie est incorporée à cet appareil et dont une seconde partie est fixe et alimentée, par exemple, par le réseau alternatif. Le couplage entre les deux parties du dispositif de recharge est effectué au moyen d'un transformateur d'impulsions dissociable (ou séparable) en deux parties respectivement incorporées dans celle-ci.

Dans un article paru aux pages 8E et 10E du N° 2 du vol. 50 de la revue US »ELECTRONICS«, daté du 20 janvier 1977, intitulé »INDUCTIVE COIL USED TO CHARGE BATTERIES AND READ OUT DATA FROM AN $ 170 DOSIMETER«, on a décrit un dispositif de transmission électrique entre deux appareils dont l'un est fixe et l'autre mobile, qui comporte un transformateur d'impulsions constitué de deux parties dissociables l'une de l'aure. L'une des parties de ce transformateur comprend, située à l'intérieur du boîtier contenant l'un des appareils, un premier enroulement entourant un bout de noyau magnétique rond, de forme allongé. L'autre partie de ce transformateur est constituée par un second enroulement analogue au premier, emmanché sur un autre bout de noyau magnétique dans l'autre appareil, à l'intérieur de celui-ci. Le couplage inductif (ou magnétique) entre les appareils s'établit lorsque les deux bouts de noyau sont mis en alignement et à proximité l'un de l'autre.

Le noyau magnétique ouvert de forme allongé présente l'inconvénient de n'assurer qu'un couplage magnétique lâche ou peu serré qui est utilisable pour la transmission d'informations, mais son rendement n'est pas optimal, lorsqu'on l'utilise pour la transmission de l'énergie électrique alternative destinée au rechargement des batteries d'accumulateurs incorporées dans les appareils mobiles. On a donc intérêt utiliser des noyaux magnétiques de type fermé (voir GB-A-1 082 070 ou EP-A-0 011 991, par exemple). Chacun des appareils peut alors comporter une moitié du noyau en ferrite, en forme de »E« ou de »pot« ayant une saillie centrale cylindrique coaxiale avec sa paroi latérale tubulaire et solidaire du fond obturé. L'enroulement est alors emmanché sur le bras ou la saillie centraux. L'entrefer d'un tel circuit magnétique fermé est relativement important, car il est constitué au moins par la somme des épaisseurs des parois en contact respectives des deux appareils auxquelles adhérent ces parties séparables du noyau ou contre lesquels elles sont plaquées. Dans un tel cas, le dispositif de guidage ne peut pas être combiné avec le transformateur, mais devra en être séparé et pourvu d'un moyen de détrompage pour permettre la mise en regard et au plus près possible des deux moitiés correspondantes de chacun des transformateurs dissociables, qui font respectivement partie des appareils mobile et fixe. Si l'on veut disposer d'un dispositif de guidage par cavités et alvéoles tronçoniques, on peut utiliser un circuit magnétique où le noyau allongé est remplacé par une pièce en ferrite en forme de »T« où l'enroulement est emmanché sur le bras vertical et où l'autre enroulement séparable est disposé au fond d'une autre pièce en forme de »U«. La pièce en »T« peut être remplacée ici par un cylindre plein terminé par un épaulement en forme de disque et celle en »U« par une »coupelle« ou un »pot« (dépourvue de saillie centrale).

Dans une réalisation avantageuse du transformateur dissociable, on dispose dans les parois des boîtiers des deux appareils, à l'endroit où les deux parties dissociables du noyau magnétique entrent respectivement en contact avec celles-ci, pour pouvoir être mises en regard, des disques et éventuellement des rondelles annulaires en ferrite, qui s'y substituent au matériau plastique, par surmoulage, afin de réduire les entrefers du transformateur assemblé au minimum. Les pièces en ferrite surmoulées présentent une forme analogue à celle de la face du noyau entrant en contact avec la paroi en plastique.

Le dispositif d'alimentation de l'appareil électronique mobile, objet de l'invention, permet de recharger la batterie d'accumulateurs incorporée, de contrôler l'état de la charge de ceux-ci en comptabilisant les courants de recharge et de décharge (débité par la batterie) et d'arrêter automatiquement la recharge lorsqu'elle a été complétée en indiquant l'état rechargé.

L'invention a pour objet un dispositif d'alimentation destiné à permettre, d'une part, l'alimentation autonome en énergie électrique d'un appareil mobile portatif au moyen d'une batterie incorporée d'accumulateurs rechargeables, au cours de son fonctionnement normal, et d'autre part, la recharge de cette batterie, lorsque l'appareil mobile est mise en place dans un logement prévu à cet effet dans un appareil fixe comportant une partie fixe de ce dispositif, dit poste de rechargement, qui comprend un onduleur et une première partie fixe d'un transformateur d'impulsions dissociable dont une seconde partie mobile est contenue dans l'appareil mobile, la partie fixe de ce transformateur comprenant un premier enroulement alimenté par l'onduleur qui être magnétiquement couplé au moyen d'un noyau à un second enroulement relié à un montage redresseur pour former ensemble une source de tension continue incorporée à l'appareil mobile, rendue opérationnelle par l'assemblage des deux parties de ce transformateur et dont les bornes sont respectivement reliées à celles de la batterie au moyen d'une résistance et d'une diode d'isolement.

Suivant l'invention, ce dispositif d'alimentation est caractérisé en ce qu'il comporte, en outre, un détecteur de présence de la partie fixe indiquant au moyen d'un niveau logique prédéterminé (haut) le dépassement d'un niveau de tension fournie par la source, ce niveau logique commandant dans l'appareil mobile, le fonctionnement en mode de décomptage d'un compteur-décompteur alimenté en impulsions d'horloge qui fait partie d'une unité de calcul, de contrôle et de commande de celui-ci.

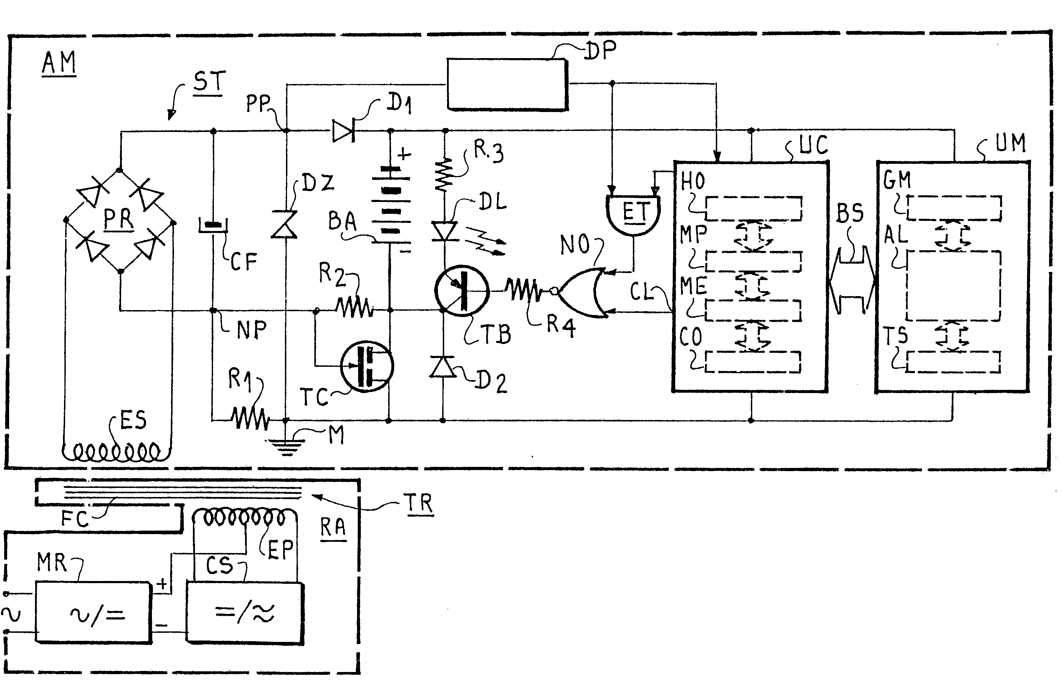

L'invention sera mieux comprise et d'autres de ses caractéristiques, objets et avantages ressortiront de la description qui suit et du dessin annexé s'y rapportant, donnés à titre d'exemple non-limitatif.

La figure unique du dessin annexé représente un schéma, en partie synoptique et en partie de principe, d'un dispositif d'alimentation conforme à l'invention.

Le dispositif d'alimentation de l'invention peut être destiné à équiper un appareil mobile d'acquisition de données en temps réel et de leur mémorisation dans une mémoire vive, gérée par un micro-processeur qui piloté par une horloge incorporée, de façon à y stocker des données numériques de manière récurrente. La restitution des données ainsi mémorisées est effectuée en temps différé, également à l'aide du microprocesseur, lorsque l'appareil mobile est mis en présence d'un premier appareil fixe, destiné à la saisie et à l'exploitation des données qui lui sont transmises à la suite d'un signal (mot) d'interrogation commandant la lecture de la mémoire vive. Un tel genre d'appareil mobile d'acquisition peut être constitué, par exemple, par un dosimètre personnel ou individuel (portatif, de taille à pouvoir être inséré dans une poche de vêtement) qui peut fournir des signaux électriques indicatifs de la dose totale absorbée par la personne qui la porte, pendant son séjour en zone contrôlée et/ou de la variation du débit de dose en fonction du temps, par exemple. Un tel dosimètre portatif peut comporter un tube Geiger-Müller comme décrit, par exemple, à la page 195 de l'ouvrage en langue anglaise, édité par HOLM & BERRY, intitulé »MANUAL ON RADIATION DOSIMETRY« et publié par MARCEL DEKKER, INC. en 1970, ou aux pages 207 à 210 de l'ouvrage en langue anglaise, édité par MORGAN & TURNER, intitulé »PRINCIPLES OF RADIATION PROTECTION« et publié par JOHN WILEY & SONS, INC. en 1967. L'appareil fixe de saisie peut alors être constitué par un dispositif périphérique relié à un ordinateur qui permet de totaliser les doses absorbées par chaque personne portant un dosimètre de ce genre, en commandant la lecture des données de la mémoire vive, notamment. Il est d'une importance capitale que l'appareil mobile soit en état de fonctionnement correct pendant la totalité du séjour de la personne qui le porte, en zône contrôlée. Cette capacité de fonctionner correctement de manière autonome pendant un intervalle de temps prédéterminé dépend principalement de l'état de la batterie d'accumulateurs en ce qui concerne leur capacité résiduelle. Il est donc indispensable de la contrôler en permanence et d'informer l'utilisateur lorsqu'une charge minimale prédéterminée permettant une durée supplémentaire de fonctionnement préalablement convenue, est atteinte afin de lui permettre de prévoir la terminaison de sa mission en zône contrôlée.

Ceci est rendu possible, d'une part, en comptabilisant la charge reçue par la batterie lorsque l'appareil mobile est placé dans un second appareil fixe destiné à lui fournir de l'énergie électrique sous la forme d'un courant alternatif et réalisé en forme de râtelier permettant de contenir (stocker) plusieurs appareils mobiles, chacun dans un alvéole de sa paroi avant.

Dans la demande de brevet précitée de la demanderesse, le second appareil fixe ou poste de rechargement, désigné dans la figure annexée par RA, comporte un montage sur sa sortie une tension continue (redressée et filtrée), et un onduleur ou convertisseur chargée par un premier enroulement EP d'un transformateur d'impulsions dissociable TR, un courant alternatif de fréquence moyenne ou élevée (de l'ordre de quelques dizaines de kilohertz, par exemple). Le poste de rechargement RA comporte en outre au moins une partie du noyau magnétique en ferrite FC sur lequel est emmanché le premier enroulement EP. Cet agencement décrit n'est que symbolique et permet d'expliquer le fontionnement du dispositif d'alimentation suivant l'invention. Il est évident que l'on peut utiliser un onduleur unique débitant dans un enroulement primaire d'un transformateur de distribution (non représenté) qui comporte autant d'enroulements secondaires identiques qu'il y a d'alvéoles ou postes de rechargement dans le second appareil fixe, dont chacun comprend la partie fixe d'un transformateur d'impulsions dissociable. Il est à noter ici que la tension fournie par l'onduleur doit alors être régulée en fonction de la charge couplée à ces parties fixes, car, en l'absence de régulation, elle subirait des variations trop importantes en fonction du nombre d'appareils mobiles présents dans les alvéoles du râtelier. De tels onduleurs régulés en tension sont bien connus (décrits par exemple dans l'ouvrage américain de HNATEK intitulé »DESIGN OF SOLID-STATE POWER SUPPLIES«, publié en 1971 par VAN NOSTRAND REINHOLD COMPANY).

Le convertisseur CS et la partie fixe du transformateur TR constituent ici la partie fixe du dispositif de chargement. Sa partie mobile comprend un second enroulement ES (mobile) qui s'emmanche sur la partie fixe du noyau magnétique FC de façon à établir un couplage inductif aussi serré que possible entre les enroulement EP et ES. La tension alternative aux bornes du second enroulement ES, qui sont reliées respectivement aux bornes de la diagonale d'entrée d'un pont redresseur PR à quatre diodes, est redressée par ce pont et filtrée au moyen d'un condensateur de filtrage CF. Les armatures positive et négative de ce condensateur CF constituent respectivement les pôles positif PP et négatif NP de la source de tension continue ST du chargeur. Le pôle positif PP de la source ST est relié, d'une part, à l'anode d'une diode d'isolement D1 dont la cathode est reliée au pôle positif de la batterie BA formée par quatre accumulateurs rechargeables (du type Cadmium-Nickel, par exemple) en série, dont la tension nominale est de 4 × 1,2 V, c'est-à-dire 4,8 V, et d'autre par, à la cathode d'une diode Zener DZ, régulatrice de tension. La diode d'isolement D1 permet d'isoler la batterie BA de la diode Zener DZ, lorsque le chargeur est rendu inopérant par le retrait de de l'appareil AM du poste de chargement (alvéole).

Le pôle négatif NP de la source ST (chargeur) est réuni, d'une part, à l'anode de la diode Zener DZ à travers une première résistance R1 de telle sorte que l'on dispose entre les bornes de cette diode Zener DZ d'une tension continue stabilisée et d'autre part, au pôle négativ de la batterie BA par l'intermédiaire d'une seconde résistance R2 qui permet de limiter le courant de charge lorsque la batterie BA est entièrement déchargée.

La jonction de la première diode D1 et du pôle positif de la batterie BA est, par ailleurs, reliée à l'une des bornes d'une troisième résistance R3 dont l'autre borne est reliée à l'anode d'une diode émetrice de lumière ou électroluminescente DL. La cathode de cette diode DL est reliée à l'émetteur d'un premier transistor bipolaire TB du type PNP dont le collecteur est relié à la jonction du pôle négatif de la batterie BA et de la seconde résistance R2. Ce circuit composé de la résistance R3, de la diode électroluminescente DL et du trajet émetteur-collecteur du transistor bipolaire TB en série est ainsi connecté en parallèle avec la batterie BA de telle sorte qu'il permet, notamment, de dériver le courant de charge fourni par la source ST à cette dernière, lorsque son état chargé provoque la fourniture d'une tension de polarisation idoïne appliquée à la base du transistor TB, comme il sera expliqué plus loin.

La jonction de la première résistance R1 avec l'anode de la diode Zener DZ est reliée à la masse flottante M de l'appareil mobile AM ainsi qu'aux entrées d'alimentation négative respectives d'une unité de mesure UM comprenant, notamment, le détecteur de rayonnnement GM, son alimentation haute-tension AL et son dispositif de traitement de signal TS, et d'une unité de calcul, de contrôle et de commande UC comprenant, notamment, une horloge HO, un microprocesseur MP, des mémoires vives et mortes (de stockage et de programmation) ME et un compteur-décompteur CD pouvant être constitué par une combinaison de certains des éléments précédents.

La jonction du pôle positif de la batterie BA avec la résistance R3 est respectivement reliée aux entrées d'alimentation positive des unités UM et UC susmentionnées.

La diode Zener DZ alimentée à travers la résistance R1 permet ainsi d'alimenter les unités susmentionnées, notamment, l'unité de calcul, de contrôle et de commande UC, par une tension stabilisée (à travers la diode D1), pendant que la batterie BA est rechargée à travers la résistance R2. Cette unité de calcul, de contrôle et de commande UC est alors en service notamment pour contrôler la charge de la batterie BA.

D'autre part, le pôle négatif de la batterie BA est relié au drain d'un second transistor du type à effet de champ et à grille isolée TC dont la source est reliée à la masse M et dont la grille est reliée au pôle négatif NP de la source ST, c'est-à-dire à la jonction de ce pôle NP avec les bornes respectives des deux résistances R1 et R2 qui constituent ici un pont de polarisation résistif pour cette grille par rapport au drain et à la source de ce transistor TC (2 N 4979) dont le canal (de type N) lorsqu'il est conducteur, court-circuite les résistances R1 et R2 de façon à alimenter les unités de mesure UM et de calcul UC à partir de la batterie BA. Le canal du transistor à effet de champ TC est éventuellement connecté en parallèle avec une seconde diode D2 dont l'anode est reliée à la source dont la cathode est reliée au drain de ce transistor TC.

Le pôle positif PP de la source ST du chargeur est relié, en outre, à l'entrée d'un étage détecteur DP de la présence d'une tension à ses bornes. Plus précisément, lorsque le premier enroulement EP est couplé au second ES par l'intermédiaire du noyau FC, le pont redresseur PR charge le condensateur CF, à une tension dont le niveau est contrôlé par ce détecteur de présence DP. Lorsque ce niveau atteint ou dépasse une valeur prédéterminée, le détecteur DP fournit sur sa sortie un niveau logique haut utilisable dans les circuits logiques, notamment, de l'unité de calcul, de contrôle et de commande UC à microprocesseur MP. Dans le cas contraire, c'est-à-dire lorsque la tension continue fournie par la source ST est inférieure de plus de 20 pour cent, par exemple, à la tension nominale, la sortie du détecteur de présence PR de la tension (ou ce qui est équivalent, de la partie fixe du chargeur), fournit un niveau bas (tension nulle). Il peut donc être réalisé au moyen d'un comparateur de tension analogiques à seuil.

La sortie du détecteur de présence DP alimente, d'une part, l'une des entrées d'une porte ET dont la sortie est réunie par l'intermédiaire d'une porte NON-OU désignée par NO à la base du premier transistor TB et, d'autre part, à l'une des entrées de l'unité de calcul, de contrôle et de commande UC, afin de commander la mise du compteur-décompteur CD qu'il contient en mode de décomptage lorsqu'elle reçoit un état haut. Celui-ci effectue alors un décomptage du temps écoulé au moyen d'impulsions fournies par l'horloge HO jusqu'à le vider ou jusqu'à ce que le résultat de ce décomptage soit égal à un nombre prédéterminé (exprimé, en forme de mot numérique) qui est appliqué par une mémoire morte à l'un des jeux d'entrées parallèles d'un comparateur numérique interne au circuit UC, dont l'autre jeu d'entrées parallèles est alimenté par les sorties parallèles, éventuellement à travers une mémoire (registre) tampon, du compteur-décompteur CD. Le comparateur fournit alors sur sa sortie unique à l'autre entrée de la porte ET, un niveau logique haut de telle sorte que la sortie de la porte NON-OU fournissant alors un niveau logique bas commande la saturation du premier transistor TB afin d'allumer la diode électroluminescente DL et de dériver la quasi-totalité du courant de charge (c'est-à-dire au moins 0,9 de celui-ci) de la batterie BA provenant du redresseur ST, par l'intermédiaire de la résistance R2, vers le circuit parallèle (TB, DL, R3) la comprenant. Le comparateur numérique peut être formé par des unités existant à l'intérieur du microprocesseur à l'aide du programme inscrit dans des mémoires mortes.

L'unité de mesure UM est réuni par une pluralité de conducteurs (faisceau) désignée par BS à des circuits entrée/sortie (non représentés) de l'unité de calcul, de contrôle et de commande UC de telle sorte que celle-ci assure la commande de la mise en route, de l'échantillonage, de l'intégration, de l'arrêt, etc., des divers éléments que celle-là contient, ainsi que la transmission des données résultant de la mesure et sa consommation de courant de la batterie BA qui est fonction, dans le cas d'un dispositif de mesure de rayonnement à l'aide d'un tube Geiger-Müller, de ces données pour que le circuit UC puisse les traiter.

Le dispositif d'alimentation suivant l'invention présente deux modes de fonctionnement distincts qui se caractérisent notamment par l'état du transistor à effet de champ et grille isolée TC.

Dans le premier mode de rechargement, lorsque l'appareil mobile AM se trouve inséré à fond dans une alvéole du poste de rechargement ou ratelier RA et, de ce fait, le couplage par le transformateur dissociable TR est établi par l'intermédiaire du noyau magnétique FC, le courant fourni par l'onduleur CS est induit dans le second enroulement ES de telle sorte que le redresseur PR charge le condensateur CF à une tension continue supérieure, d'une part, à celle qui doit fournier la batterie BA d'accumulateurs rechargeables (4,8 V) et d'autres part, à celle de la diode Zener DZ (6,2 V). Le transformateur TR dissociable est donc conçu pour que la source ST fournisse, entre les armatures du condensateur CF, une tension de $10+3$ V, par exemple.

Lorsque la batterie BA est déchargée (c'est-à-dire lorsque sa charge résiduelle constitue une fraction prédéterminée de sa capacité en ampère-heures), la source ST fournit un premier courant $I_C$ (de charge) qui prend naissance à son pôle positif PP et parcourt la première diode D1, la batterie BA, et la seconde résistance R2 en série pourt aboutir à son pôle négatif NP, un second courant $I_Z$ qui parcourt la diode Zener DZ et la première résistance R1 en série, un faible courant alimentant l'étage détecteur DP et un alimentant le circuit UC (1,8 mA environ), qui traversent également la résistance R1.

Le courant de charge $I_C$ provoque aux bornes de la seconde résistance R2 une première chute de tension et la somme des autres courants provoquent aux bornes de la première résistance R1 une seconde chute de tension, qui sont telle qu'à leur jonction, reliée au pôle négatif NP de la source ST apparaît une tension négative par rapport à la masse M qui est reliée à la source du transistor à effet de champ TC. La grille isolée est, par conséquent, polarisée négativement par rapport à la source reliée à l'anode de la diode Zener et encore plus négativement par rapport à son drain qui est polarisé à une faible tension positive ($+1,2$ V environ) par rapport à la source. Le transistor à effet de champ TC est donc bloqué pendant la recharge de la batterie BA.

Lorsque la batterie BA est chargée, c'est-à-dire lorsque le compteur-décompteur CD en mode de décomptage arrive à fournir le nombre indiquant qu'à raison de 10 mA de courant de charge $I_C$ la batterie BA est pleinement chargée (capacité de 180 mAh), qui assure à l'appareil mobile une autonomie de 20 heures au moins, la présence simultanée d'un niveau haut aux deux entrées de la porte ET respectivement fournis par le détecteur de présence PP et par le comparateur numérique interne du circuit CU, commandant à travers la porte »NON-OU« désignée par NO et la résistance de limitation du courant de base R4, la saturation du transistor bipolaire TB de type PNP ce qui permet de dériver aux environs de 10 mA du courant de charge $I_C$, le courant résiduel parcourant la batterie BA étant alors de l'ordre de 1 mA. L'allumage de la diode électroluminescente DL signale alors l'état chargé de la batterie BA pour indiquer à éventuel utilisateur que l'appareil mobile AM peut être retiré du ratelier RA. A l'intérieur du circuit CU, le comparateur commande alors l'arrêt de l'application des impulsions d'horloge (HO) à l'entrée de comptage du compteur-décompteur CD.

La résistance R1 étant toujours parcourue par le courant de la diode Zener DZ et la résistance R2 par celui du circuit, de fuite R3, DL, TB et par le courant de charge résiduelle additionnés, le transistor TC reste bloqué par sa tension de grille négative. Il est toutefois possible que la somme des courants qui parcourent simultanément la résistance R2 diminue par rapport au courant de charge maximal de telle sorte que la pôle négatif de la batterie BA devienne négatif par rapport à la masse M et que la seconde diode D2 se mette alors à conduire de façon à limiter la tension drain-source négative à quelques dizièmes de volts.

Lorsque l'appareil mobile AM est retiré de son alvéole dans le ratelier RA, le condensateur CF cesse d'être chargé par le pont redresseur PR qui l'isole de l'enroulement ES. Le condensateur CF se décharge alors à travers l'impédance d'entrée de l'étage détecteur DP, par exemple, et les diodes Zener DZ, d'isolement D1 et de limitation D2 se bloquent. Le détecteur de présence DP fournissant alors sur sa sortie un niveau bas à la porte ET et au circuit UC de telle sorte qu'ils commandent respectivement le blocage du transistor bipolaire TB et la mise en fonctionnement due compteur-décompteur CD dans le mode de comptage. Le courant d'alimentation des circuits UC et UM est, à partir de cet instant, fourni par la batterie BA de telle sorte qu'il parcourt le transistor à effet de champ TC dont la grille n'est pratiquement plus polarisée ($V_{GS}$ inférieur à $-0,5$ V) par rapport à sa source. La tension drain-source du transistor TC devient alors de l'ordre de quelques dizaines de millivolts (négative) qui est appliquée aux bornes du diviseur résitif R1—R2 de manière à le rendre saturé.

L'unité de calcul UC est agencé de telle sorte que dès que le signal de présence du chargeur fourni par le détecteur DP devient nul, le compteur-décompteur est mis en mode de comptage et il compte des impulsions d'horloge qui sont périodiquement incrémentées par un nombre proportionnel à la consommation de l'unité de mesure UM. Si cette unité de mesure UM est destinée à équiper un dosimètre portatif équipé d'un détecteur de rayonnement par impulsions, tel qu'un détecteur à semi-conducteur ou à tube Geiger-Müller capable de mesure le débit de dose, le comptage de l'horloge HO est périodiquement incrémenté d'un nombre proportionnel au débit de dose sans nécessiter d'un dispositif spécifique de mesure du courant consommé.

Il est d'autre part possible de prévoir une horloge HO interne au circuit UC qui fonctionne à une fréquence plus élevée et qui comporte plusieurs fréquences dans l'ordre décroissant qui peuvent être appliquées sélectivement au compteur-décompteur CD en fonction du débit de la batterie BA qui peut être détecté au moyen de plusieurs comparateurs de tension analogiques ou au moyen d'un convertisseur analogique-numérique et un circuit comprenant des portes logiques combinées permettant de le quantifier. Les comparateurs de tension ou des portes de coincidence ET combinant les sorties du convertisseur A/N permettent de commander sélectivement des portes permettant de coupler sélectivement à l'entrée de comptage du compteur décompteur CD les sorties de ces différents diviseurs de fréquence (compteurs). Il est également possible d'utiliser un diviseur programmable dont les entrées de commande sont alimentées par un convertisseur A/N de telle sorte que le facteur de division varie de façon inverse par rapport à la tension analogique appliquée à l'entrée du convertisseur A/N, qui serait alors proportionnelle au courant fourni par la batterie BA.

Les nombres (mots) fournis par les sorties parallèles du compteur-décompteur sont périodiquement transférés à une mémoire vive de telle sorte qu'à chaque mise en route de l'unité de mesure UM dont la consommation est la plus forte, il soit possible de contrôler la capacité résiduelle de la batterie BA. Ces nombres sont également périodiquement comparés à l'aide du comparateur numérique susmentionné à un nombre représentant la capacité résiduelle minimale que l'on admet et qui doit correspondre à un certain nombre d'heures de fonctionnement.

Lorsque la capacité résiduelle atteint sa valeur minimale prédéterminée ou lorsqu'elle devient inférieure à celle-ci, l'appareil mobile AM doit le signaler à l'utilisateur. Dans un mode de réalisation, où l'unité de calcul, de contrôle et de commande UC alimente un dispositif d'affichage des résultats de la mesure à l'aide de cristaux liquides (LCD), il peut faire clignoter le dispositif d'affichage pour indiquer que la batterie BA ne peut dépasser un intervalle d'utilisation de quelques heures avant d'être déchargée, par exemple.

On remarquera ici que l'autre entrée de la porte NO commandant le transistor bipolaire TB est réunie à une autre sortie CL de l'unité de calcul, de contrôle, et de commande UC à microprocessure MP. Cette sortie CL du circuit UC commande le clignotement intermittent de la diode électroluminescente DL. Ce clignotement se produit en fonction des données fournies par l'unité de mesure UM. Dans un dosimètre de rayonnements ionisants il est possible d'indiquer par un allumage bref une quantité de dose équivalente prédéterminée, (par exemple de 0,1 millirem). De cette façon, la fréquence du clignotement de la diode DL augmente avec le débit de dose pour avertir l'utilisateur, porteur de l'appareil AM, de l'accroissement de l'intensité du rayonnement dans l'espace qu'il occupe.

Il va de soie que les unités de mesure UM et, plus particulièrement, l'unité de calcul, de contrôle et de commande UC peuvent être réalisées soit à l'aide d'un microprocesseur et de circuits à logique programmée, soit au moyen d'éléments logiques câblés. La première solution est plus avantageuse en ce qui concerne le nombre d'éléments intégrés, la consommation de courant et, de ce fait, l'autonomie du fonctionnement sur batterie.

**Revendications**

1. Dispositif d'alimentation destiné à permettre, d'une part, l'alimentation autonome en énergie électrique d'un appareil mobile portatif (AM) au moyen d'une batterie incorporée d'accumulateurs rechargeables (BA) au cours de cette batterie (BA), lorsque l'appareil mobile (AM) est mis en place dans un logement prévu à cet effet dans un appareil fixe comportant une partie fixe de ce dispositif, dit poste de rechargement (RA), qui comprend un onduleur (CS) et une première partie fixe (EP, FC) d'un transformateur d'impulsions (TR) dissociable dont une seconde partie mobile (ES) est contenue dans l'appareil mobile (AM), la partie fixe de ce transformateur (TR) comprenant un premier enroulement (EP) alimenté par l'onduleur (CS) qui peut être magnétiquement couplé au moyen d'un noyau (FC) à un second enroulement (ES) relié à un montage redresseur (PR, FC) pour former ensemble, une source de tension continue (ST) incorporée à l'appareil mobile (AM), rendue opérationnelle par l'assemblage de deux parties de ce transformateur (TR) et dont les bornes (PP, NP) sont respectivement reliées à celles de la batterie (BA) au moyen d'une résistance (R2) et d'une résistance (R2) et d'une diode d'isolement (D1), caractérisé en ce qu'il comporte, en outre, un détecteur de présence (DP) de la partie fixe (RA) indiquant au moyen d'un niveau logique prédéterminé (haut) le dépassement d'un niveau de tension fournie par la source, ce niveau logique commandant dans l'appareil mobile (AM), le fonctionnement en mode de décomptage d'un compteur-décompteur (CD) alimenté en impulsions d'horloge (HO) qui fait partie d'une unité de calcul, de contrôle et de commande (UC) de celui-ci.

2. Dispositif d'alimentation suivant la revendication 1, caractérisé en ce qu'un moyen de comparaison numérique dont un jeu d'entrées reçoit le mot fourni par le compteur-décompteur (CD) et indiquant le temps de charge de la batterie (BA), et dont l'autre jeu d'entrées reçoit un mot fixe fourni par une mémoire morte et indiquant la pleine charge de celle-ci, commande, d'une part, l'arrêt du décomptage et, d'autre part, la mise en conduction d'un circuit de dérivation comprenant un transistor (TB) et une diode électroluminescente (DL) en série et connectée en parallèle avec la batterie (BA) afin d'en dévier la majeure partie du courant fourni par la source (ST) et d'indiquer l'état rechargé de la batterie (BA) par l'allumage de cette diode (DL).

3. Dispositif d'alimentation suivant l'une des revendications précédentes, caractérisé en ce que la source (ST) alimente à travers une autre résistance (R1) reliée au même pôle (NP) de cette source (ST) que la résistance (R2) qui la réunit à la batterie (BA), un dispositif régulateur de tension à diode Zener (DZ) dont les bornes sont respectivement reliées aux bornes d'alimentation des circuits électroniques de l'appareil mobile (AM), notamment, à celles de l'unité de calcul, de commande et de contrôle (UC), afin de les alimenter par une tension stabilisée pendant le rechargement de la batterie (BA), même lorsqu'elle est complètement déchargée, et en ce que les jonctions respective de ces résistances (R1, R2) avec la batterie (BA) et la diode Zener (DZ) sont respectivement reliées au drain et à la source d'un transistor à effet de champ (TC) dont la grille isolée est reliée au point commun de ces résistances (R1, R2), de telle sorte que ce transistor (TC) reste bloqué pendant que ces dernières (R1, R2) sont respectivement parcourues par des courants et qu'il devient conducteur, lorsque la source (ST) ne fournit plus de tension suffisante pour alimenter la diode Zener (DZ) et la batterie (BA), de manière à réunir alors la batterie (BA) aux circuits de l'appareil mobile (AM).

4. Dispositif d'alimentation suivant l'une des revendications précédentes, caractérisé en ce que le passage de la sortie du détecteur de présence (DP) dans un état logique complémentaire à celui indiquant la présence d'une tension suffisante, commande la mise en fonctionnement du compteur-décompteur (CD) en mode de comptage pour comptabiliser le courant débité par la batterie (BA), lors du fonctionnement autonome de l'appareil mobile (AM).

5. Dispositif suivant la revendication 4, du type dans lequel l'appareil mobile comporte une unité de mesure (UM) du type dosimètre à détecteur de rayonnement par impulsions, tel qu'un tube Geiger-Müller, dont la consommation de courant est proportionnel à la fréquence moyenne des impulsions engendrées, caractérisé en ce que le comptage du compteur-décompteur (CD) est périodiquement incrémenté d'un nombre proportionnel au nombre d'impulsions comptées pendant cette période.

6. Dosimètre suivant la revendication 4, du type dans lequel la consommation de courant de l'appareil mobile (AM) est variable avec le temps, caractérisé en ce que l'unité de calcul, de contrôle et de commande (UC) comporte une horloge (HO) alimentant plusieurs compteurs-diviseurs de fréquence en cascade, dont les sorties sont respectivement couplées de manière sélective à l'entreé de comptage du compteur-décompteur (CD) en fonction de courant consommé par l'appareil mobile (AM) afin que le résultat de comptage soit au moins approximativement indicatif de la capacité résiduelle de la batterie (BA).

7. Dispositif d'alimentation suivant l'une des revendications 4 à 6, caractérisé en ce que le mot binaire fourni par le compteur-décompteur (CD) est comparé à l'aide d'un moyen de comparaison numérique à un mot binaire correspondant à une capacité limitée préétablie, le moyen de comparaison commandant un moyen de signalisation, tel que le clignotement de l'affichage des résultats de mesure, lorsque la capacité résiduelle de la batterie (BA) devient inférieure à cette valeur limite.

8. Dispositif d'alimentation suivant l'une des revendications précédentes, caractérisé en ce que l'unité de calcul, de contrôle et de commande (UC) gérant le rechargement et la décharge de la batterie (BA) incorporée, comporte un microprocesseur (MP) classique.

9. Application du dispositif d'alimentation suivant l'une quelconque des revendications précédentes, à un dispositif de dosimètrie individuelle portatif.

**Patentansprüche**

1. Versorgungsvorrichtung zur autonomen Speisung eines beweglichen, tragbaren Gerätes (AM) mit elektrischer Energie mittels einer eingebauten Batterie aus Akkumulatoren (BA), die im Laufe seines normalen Betriebs wiederaufladbar sind, und andererseits zum Aufladen dieser Batterie (BA), wenn das bewegliche Gerät (AM) in eine Aufnahme eingesetzt ist, die zu diesem Zweck in einem feststehenden Gerät vorgesehen ist, das einen feststehenden Teil dieser Vorrichtung enthält, welcher als Wiederaufladestation (RA) bezeichnet wird und einen Wechselrichter (CS) und einen ersten festen Teil (EP, FC) eines Impulstransformators (TR) umfaßt, der teilbar ist und wovon ein zweiter, beweglicher Teil (ES) in dem beweglichen Gerät (AM) enthalten ist, wobei der feste Teil dieses Transformators (TR) eine erste Wicklung (EP) enthält, die durch den Wechselrichter (CS) gespeist wird, der magnetisch mittels eines Kerns (FC) an eine zweite Wicklung (ES) gekoppelt werden kann, die mit einer Gleichrichterspannungsquelle (ST) zu bilden, welche in das bewegliche Gerät (AM) eingebaut ist und die betriebsfähig gemacht wird durch das Zusammensetzen der zwei Teile dieses Transformators (TR), und wovon die Anschlüsse (PP, NP) mit denen der Batterie (BA) über einen Widerstand (R2) und über eine Trenndiode (D1) verbunden sind, dadurch gekennzeichnet, daß sie ferner einen Detektor (DP) für die Anwesenheit des festen Teils (RA) enthält, welcher über einen vorbestimmten (hohen) Logikpegel die Überschreitung eines von der Quelle gelieferten Spannungspegels anzeigt, wobei dieser Logikpegel in dem beweglichen Gerät (AM) den Abwärtszählbetrieb eines Aufwärts/Abwärts-Zähler (CD) steuert, der mit Impulsen aus einer Zeitbasis (HO) gespeist wird, die Bestandteil einer Rechen-, Kontroll- und Steuereinheit (UC) desselben ist.

2. Versorgungsvorrichtung nach Anspruch 1, dadurch gekennzeichnet, daß eine digitale Vergleichereinrichtung, deren eine Gruppe von Eingängen das von dem Aufwärts/Abwärts-Zähler (CD) gelieferte Wort empfängt und die Ladezeit der Batterie (BA) angibt, und dessen andere Gruppe von Eingängen ein festes Wort empfängt, welches von einem Festwertspeicher geliefert wird und die vollständige Ladung derselben angibt, einerseits das Anhalten des Abwärtszählens steuert und andererseits die Leitendsteuerung einer Ableitschaltung auslöst, welche einen Transistor (TB) und eine Leuchtdiode (DL) in Reihenschaltung enthält, die parallel zu der Batterie (BA) geschaltet ist, um von dieser den größten Teil des von der Quelle (ST) gelieferten Stromes abzulenken und den wiederaufgeladenen Zustand der Batterie (BA) durch Aufleuchten dieser Diode (DL) anzuzeigen.

3. Versorgungsvorrichtung nach einem der vorstehenden Ansprüche, dadurch gekennzeichnet, daß die Quelle (ST) über einen weiteren Widerstand (R1), der mit demselben Pol (NP) dieser Quelle (ST) wie der mit der Batterie (BA) verbundene Widerstand (R2) verbunden ist, eine Zenerdioden-Spannungsstabilisiervorrichtung (DZ) speist, deren Anschlüsse mit den entsprechenden Versorgungsanschlüssen der elektronischen Schaltungen des beweglichen Gerätes (AM) verbunden sind, insbesondere mit denen der Rechen-, Steuer- und Kontrolleinheit (UC), um sie mit einer stabilisierten Spannung während des Wiederaufladens der Batterie (BA) selbst dann zu versorgen, wenn sie vollständig entladen ist, und daß die entsprechenden Verbindungen dieser Widerstände (R1, R2) mit der Batterie (BA) und der Zenerdiode (DZ) mit dem Drain bzw. mit der Source eines Feldeffekttransistors (TC) verbunden sind, dessen isoliertes Gate mit dem Verbindungspunkt zwischen diesen Widerständen (R1, R2) verbunden ist, so daß dieser Transistor (TC) gesperrt bleibt, während letztere (R1, R2) von Strömen durchflossen werden, und leitend wird, wenn die Quelle (ST) keine ausreichende Spannung zur Versorgung der Zenerdiode (DZ) und der Batterie (BA) liefert, so daß dann die Batterie (BA) mit den Schaltkreisen des beweglichen Gerätes (AM) verbunden wird.

4. Versorgungsvorrichtung nach einem der vorstehenden Ansprüche, dadurch gekennzeichnet, daß der Übergang des Ausgangs des Anwesenheitsdetektors (DP) in einen Logikzustand, welcher komplementär zu dem die Anwesenheit einer ausreichenden Spannung anzeigenden ist, die Inbetriebnahme des Aufwärts/Abwärts-Zählers (CD) im Aufwärtszählbetrieb steuert, um den von der Batterie (BA) während des autonomen Betriebs des beweglichen Gerätes (AB) abgegebenen Strom quantitativ zu registrieren.

5. Vorrichtung nach Anspruch 4, vom Typ, bei welcher das bewegliche Gerät eine Meßeinheit (UM) vom Dosimetertyp mit Impuls-Strahlungsdetektor umfaßt, wie ein Geiger-Müller-Zählrohr, dessen Stromverbrauch proportional zur mittleren Frequenz der erzeugten Impulse ist, dadurch gekennzeichnet, daß die Zählung des Aufwärts/Abwärts-Zählers (CD) periodisch um eine Zahl inkrementiert wird, die proportional zur Anzahl von während dieser Periode gezählten Impulsen ist.

6. Dosimeter nach Anspruch 4, vom Typ, bei welchem der Stromverbrauch des beweglichen Geräts (AM) zeitlich variabel ist, dadurch gekennzeichnet, daß die Rechen-, Kontroll- und Steuereinheit (UC) eine Zeitbasis (HO) umfaßt, die mehrere in Kaskade geschaltete Frequenzteiler-Zähler speist, deren Ausgänge jeweils selektiv mit dem Zähleingang des Aufwärts/Abwärts-Zählers (CD) in Abhängigkeit von dem durch das bewegliche Gerät (AM) verbrauchten Strom verbunden werden, damit das Zählergebnis wenigstens approximativ die verbleibende Kapazität der Batterie (BA) angibt.

7. Versorgungsvorrichtung nach einem der Ansprüche 4 bis 6, dadurch gekennzeichnet, daß das Binärwort, welches von dem Aufwärts/Abwärts-Zähler (CD) geliefert wird, durch eine digitale Vergleichereinrichtung verglichen wird mit einem Binärwort, welches einer im voraus festgelegten begrenzten Kapazität entspricht, wobei die Vergleichereinrichtung ein Signalisiermittel steuert, wie das Blinken der Anzeige der Meßergebnisse, wenn die Restkapazität der Batterie (BA) unter diesen Grenzwert absinkt.

8. Versorgungsvorrichtung nach einem der vorstehenden Ansprüche, dadurch gekennzeichnet, daß die Rechen-, Kontroll- und Steuereinheit (UC), die das Wiederaufladen und Entladen der eingebauten Batterie (BA) verwaltet, einen herkömmlichen Mikroprozessor (MP) umfaßt.

9. Anwenden der Versorgungsvorrichtung nach einem der vorstehenden Ansprüche auf eine individuelle, tragbare Dosimetervorrichtung.

# Claims

1. Supply device for permitting, on the one hand, the autonomous electric energy supply of a movable portable apparatus (AM) by means of an incorporated battery (BA) of accumulators susceptible to be recharged during its normal operation, and, on the other hand, the recharging of this battery (BA) when the movable apparatus (AM) is placed into an accomodation procided therefor within an stationary apparatur comprising a fixed part of this device, called a recharging station (RA), which comprises a direct-to-alternating converter (CS) and a first fixed part (EP, FC) of a pulse transformer (TR) adapted to be separated and a second, movable part (ES) of which is contained in the movable apparatus (AM), the fixed part of this transformer (TR) comprising a first winding (EP) fed by the direct-to-alternating converter (CS) which can be magnetically coupled by means of a core (FC) to a second winding (ES) connected to a rectifier circuit (PR, FC) for forming with each other a direct voltage source (ST) incorporated into the movable apparatus (AM) and rendered operational by the assembly of the two parts of this transformer (TR), and the terminals (PP, NP) of which are respectively connected to those of the battery (BA) through a resistor (R2) and an insulating diode (D1), characterized in that it further comprises a detector (DP) of the presence of the fixed part (RA) indicating by means of a predetermined (high) logic level that a voltage supplied by the source has been exceeded, this logic level controlling within the movable apparatus (AM) the downward counting operation of an up/down counter (CD) receiving pulses from a clock (HO) which is part of a computing, monitoring and control unit (UC) thereof.

2. Supply device according to claim 1, characterized in that digital comparing means one set of inputs of which receives the word supplied by the up/down counter (CD) and indicating the charging time of the battery (BA), and the other set of inputs of which receives a fixed word supplied by a read only memory and indicating the complete charging thereof, controls, on the one hand, the stopping of the downward counting and on the other hand, the conduction of a derivative circuit comprising a transistor (TB) and an electroluminescent diode (DL) in series connection and connected in parallel to the battery (BA) in order to keep it from the major portion of the current supplied by the source (ST) and to indicate the recharged state of the battery (BA) by the lighting of this diode (DL).

3. Supply device according to any of the preceding claims, characterized in that the source (ST) supplies through a further resistor (R1) connected to the same terminal (NP) of this source (ST) as the resistor (R2) connected to the battery (BA), a voltage regulator device having a Zener diode (DZ) and the terminals of which are respectively connected to the supply terminals of the electronic circuits of the movable apparatus (AM), in particular to those of the computing, control and monitoring unit (UC), in order to feed the same with a controlled voltage during the recharging of the battery (BA), even when it is completely discharged, and in that the respective junctions of these resistors (R1, R2) with the battery (BA) and the Zener diode (DZ) are respectively connected to the drain and to the source of a field effec transistor (TC) the insulated gate of which is connected to the common point of these resistors (R1, R2), in such a manner that this transistor (TC) remains blocked during respective current flows through the latter (R1, R2) and becomes conductive when the source (ST) fails to supply a sufficient votrage for feeding the Zener diode (DZ) and the battery (BA), so that the battery (BA) is then connected to the circuits of the movable apparatus (AM).

4. Supply device according to any of the preceding claims, characterized in that the passing of the output of the prescence detector (DP) into a logic state complementary to that indicating the presence of a sufficient voltage controls the starting of an upward counting operation of the up/down counter (CD) for registration of the amount of current supplied by the battery (BA) during the autonomous operation of the movable apparatus (AM).

5. Device according to claim 4, of the type wherein the movable comprises a measurement unit (UM) of dosimeter type with a radiation pulse detector such as a Geiger-Müller tube, and the current consumption of which is proportional to the average frequency of the general pulses, characterized in that the counting of the up/down counter (CD) is periodically incremented by a number proportional of the number of the pulses counted during this period.

6. Dosimeter according to claim 4, of the type wherein the current consumption of the movable apparatus (AM) is variable in time, characterized in that the computing, monitoring and control unit (UC) comprises a clock (HO) feeding a plurality of cascade-connected frequency dividing counters the outputs of which are respectively connected selectively to the counting input of the up/down counter (CD) as a function of the current consumed by the movable apparatus (AM) so that the counting result is at least approximatively indicative of the remaining capacity of the battery (BA).

7. Supply device according to any of claims 4 to 6, characterized in that the binary word supplied by the up/down counter (CD) is compared by digital comparing means with a binary word corresponding to a pre-established limited capacity, the comparing means controlling signalling means such as the flashing of the measurement results display when the remaining capacity of the battery (BA) becomes inferior to this limit value.

8. Supply device according to any of the preceding claims, characterized in that the computing, monitoring and control unit (UC) which manages the recharging and the discharging of the incorporated battery (BA) comprises a conventional microprocessor (MP).

9. Use of the supply device according to any of the preceding claims in an individual portable dosimeter device.